Europäisches Patentamt

European Patent Office

Office européen des brevets

(11) Publication number : **0 609 154 A1**

# EUROPEAN PATENT APPLICATION

(21) Application number : **94400187.4**

(51) Int. Cl.⁵ : **G11B 5/704**

(22) Date of filing : **28.01.94**

(30) Priority : **29.01.93 JP 13781/93**

(43) Date of publication of application :
**03.08.94 Bulletin 94/31**

(84) Designated Contracting States :
**DE FR GB IT**

(71) Applicant : **MINNESOTA MINING AND MANUFACTURING COMPANY**
**3M Center,**
**P.O. Box 33427**
**St. Paul, Minnesota 55133-3427 (US)**

(72) Inventor : **Oiri, Shigeto, c/o Sumitomo 3M Limited**
**33-1, Tamagawadai 2-Chome**
**Setagaya-ku, Tokyo 158 (JP)**
Inventor : **Tsukamoto, Yoji, c/o Sumitomo 3M Limited**
**33-1, Tamagawadai 2-Chome**
**Setagaya-ku, Tokyo 158 (JP)**
Inventor : **Ohta, Toshio, c/o Sumitomo 3M Limited**
**33-1, Tamagawadai 2-Chome**
**Setagaya-ku, Tokyo 158 (JP)**

(74) Representative : **Ahner, Francis et al**
**CABINET REGIMBEAU**
**26, avenue Kléber**
**F-75116 Paris (FR)**

(54) **High recording density magnetic recording medium having an undercoat layer.**

(57)   A high recording density magnetic recording medium having an undercoat layer comprising non-magnetic particles, a binder, and a lubricant between a non-magnetic base material and a magnetic layer. The non-magnetic particles include acicular titanium oxide with a long axis length of 0.1 - 0.5 $\mu$m and structured carbon black having an oil absorbency of at least 300 ml/100 g. The weight ratio between the titanium oxide and carbon black is at least about 90 :10.

EP 0 609 154 A1

Field of the Invention

The present invention relates to a magnetic recording medium, e.g., a magnetic disk such as floppy disk, a magnetic tape such as a video tape or data cartridge, and the like, and further to the composition of a magnetic recording medium having an undercoat layer provided between the magnetic layer and base film of the medium.

Background of the Invention

High recording density has become an indispensable requirement to the performance of magnetic recording media, thereby requiring a decrease in the thickness of the magnetic layer in the media. However, the decrease of the magnetic layer thickness (about 1 μm or less), has been accompanied by attendant practical problems; e.g., the durability of the magnetic layer becomes noticeably decreased at low thicknesses. Many techniques of providing an undercoat layer between the magnetic layer and a base film have been examined to improve the durability of such a magnetic layer.

Japanese Unexamined Patent Publication No. 61-214127 discloses an improvement in the surface smoothness and electromagnetic transfer characteristic of a magnetic recording medium by the use of an electroconductive tin oxide fine powder as a filler for an undercoat layer. Japanese Unexamined Patent Publication No. 63-317925 discloses maintenance of sufficient durability with respect to a magnetic recording medium having a magnetic layer with a thickness of 1.0 μm or less by the use of electroconductive titanium oxide as a filler for an undercoat layer. Japanese Unexamined Patent Publication No. 63-317926 discloses maintenance of sufficient durability with respect to a magnetic recording medium having a magnetic layer with a thickness of 1.0 μm or less by the use of titanium oxide and carbon black as fillers for an undercoat layer.

However, the non-magnetic particles of the aforesaid undercoat layers constitute spherical powder, resulting in high packing density of the particles in the undercoat layer. When the particle diameter of the powder is 0.2 μm or less, the lubricant has not been sufficiently retained, resulting in a magnetic recording medium having insufficient durability. In addition, when the diameter of the non-magnetic particles is greater than 0.2 μm, good surface smoothness has not been achieved even when the particles are sufficiently dispersed. Accordingly, by conventional techniques, an undercoat layers capable of sufficiently accumulating a lubricant and providing high surface smoothness have not been achieved.

It is known that carbon black having a structured constitution has a high electroconductivity. Japanese Unexamined Patent Publication No. 61-177631 discloses a technique of controlling chargeability of a magnetic layer by the utilization of a carbon black having a structured constitution. Japanese Unexamined Patent Publication No. 61-177631 recommends the use of carbon black having an oil absorbing capability of 90 mℓ/100 g or more. However, in a magnetic recording medium having a thin magnetic layer as in the present invention, such an oil absorbency is insufficient.

Summary of the Invention

The object of the present invention is to provide a magnetic recording medium which improves both the smoothness and durability of a magnetic layer surface by providing an undercoat layer with a specific composition between a magnetic layer and a base film to create a medium having high density recording and high durability.

The aforesaid problems are solved by a high recording density magnetic recording medium provided with an undercoat layer between a non-magnetic base material and a magnetic layer. The undercoat layer is comprised of a binder, a lubricant and non-magnetic particles. The non-magnetic particles comprise acicular titanium oxide with a long axis length less than 0.5 μm and carbon black having a structured constitution and an oil absorbency of at least 300 ml/100g. The weight ratio between the titanium oxide and carbon black is within the range between 90:10 and 100:0, i.e., at least 90:10.

Detailed Description

The magnetic recording medium of the present invention has at least a non-magnetic base material, undercoat layer, and magnetic layer. The non-magnetic base material may be any base material which is conventionally used as a base material of a magnetic recording medium, including film made of organic or inorganic material. Such as polyethylene terephthalate, polyethylene naphthalate, acetate film, polyimide film, polyamide film, glass, etc.

The undercoat layer of the present invention is characterized in that it is comprised of non-magnetic particles, a binder, and a lubricant. The non-magnetic particles comprise acicular titanium oxide powder with a particle long axis length within the range of 0.1 to 5 μm and structured carbon black having an oil absorbency of at least 300 ml/100g. The weight ratio between the titanium oxide and carbon black should be within the range between 90:10 and 100:0.

The acicular titanium oxide constituting the non-magnetic particles of the undercoat layer should have a long axis length of 0.1 - 0.5 μm. When titanium oxide with a long axis length of more than 0.5 μm is used, surface smoothness cannot be obtained even if a calendering treatment is performed. When the long axis length is less than 0.1 μm, the dispersibility of the acicular titanium oxide particles may become worsened and the surface smoothness impaired.

In addition, the aspect ratio of the acicular titanium oxide powder is preferably within the range between 5 and 10. If the aspect ratio is less than 5, the desired effect that is peculiar to the acicular shape, that is, the function of the undercoat layer as a lubricant reservoir due to the increase of void ratio, is lowered. Titanium oxide with an aspect ratio exceeding 10 is not available, and even if it were, titanium dioxide particles with such a high acicular ratio are liable to be broken and are thus anticipated to be destroyed because they would likely be unable to endure a large shear strength during the kneading-dispersing process, thereby minimizing their effectiveness.

In the case where it is necessary to improve the electroconductivity of the undercoat layer, there may be added a carbon black having a structured constitution. The compounding ratio of titanium dioxide and carbon black is required to be within the range between 90/10 and 100/0 by weight ratio. If carbon black is compounded in a proportion larger than the ratio of 90/10, the surface roughness of the undercoat layer becomes lowered, and simultaneously, the surface roughness of the top coat layer, a magnetic layer, becomes also lowered, so that the electromagnetic transfer characteristics (e.g. signal output or the like) of the recording medium becomes noticeably lowered.

Among carbon blacks, there is most effectively used a carbon black having a structured constitution, which is excellent in electroconductivity. As used herein, the terms "structured constitution" means a chain-like connection of the individual carbon black particles such that the carbon black has a coagulation structure. Since such a carbon black has high electroconductivity, the surface resistivity of the magnetic recording medium can be lowered by blending such a carbon black with the magnetic layer or undercoat layer in a small amount.

As a criterion for the development grade of the structured constitution of carbon black, the oil absorbency of carbon black is typically used. In general, the greater the oil absorbency, the better developed the structure constitution, and the better the electroconductivity. When a small amount of a carbon black (10% by weight or less in the whole amount of a non-magnetic body) is added into the undercoat layer, a carbon black other than that having high oil absorbency cannot sufficiently exhibit its effect.

In the carbon black as described above, the oil absorbency thereof is preferably 300 mℓ/100 g or more, and that of 450 mℓ/100 g is particularly preferable.

Preferred sources for carbon black with an having an oil absorbency of 300mℓ/100 g or more usable in the present invention include K.B. EC, produced by Lion K.K. having an oil absorbency of 360 mℓ/100 g; K.B. EC 600JD, also produced by Lion K.K., 495 mℓ/100 g; HS-500, produced by Asahi Carbon K.K., 447 mℓ/100 g; Black Pearls 2000, produced by Cabot K.K., 330 mℓ/100 g; and 3950 produced by Mitsubishi Kasei Kogyo K.K., 330 mℓ/100 g.

The binder may be any binder that is conventionally used in a magnetic recording medium, e.g., urethane resins, polyvinyl chloride resins, phenoxy resins, polyester resins or copolymers of vinyl chloride monomer and other vinyl monomers.

The compounding weight ratio between the non-magnetic particles (titanium dioxide + carbon black) and the binder contained in the undercoat layer should be within the range between 100/5 and 100/100. When the proportion of compounded binder is less than 100/5, the dispersibility of the non-magnetic particles becomes noticeably worsened, and the surface roughness of the undercoat layer becomes therefore remarkably lowered. When the proportion of the compounded binder is larger than 100/100, however, the percentage of void of the undercoat layer is lowered, resulting in the lowering of the function thereof as a lubricant reservoir, although the dispersibility of the non-magnetic particles becomes improved. Moreover, the effect of calendering treatment is lowered, resulting in an increase in the surface roughness of the magnetic layer.

As the lubricant contained in the undercoat layer of the magnetic recording medium of the present invention, there may be used conventionally used lubricants, e.g., fatty acid esters, fatty acids, fatty acid amides, fluorine hydrocarbons, fluorine alcohols and the like. The amount of lubricant used is preferably within the range between 0.1 and 10 parts by weight per 100 parts by weight of the magnetic substance. When the amount of lubricant is less than 0.1 parts per 100 by weight, its lubricating properties are not effective, and durability and the like of the recording medium are not improved. When this amount exceeds 10 parts per 100 by weight, however, there is not obtained a suitable strength of the magnetic layer, and the durability of the magnetic layer may be degraded.

The thickness of the undercoat layer is preferably within the range between 0.2 and 5 $\mu$m. When the thickness is less than 0.2 $\mu$m, the function of the undercoat layer as a lubricant reservoir becomes lowered, resulting in lowering of the durability thereof as a magnetic recording medium. When the thickness exceeds 5 $\mu$m, however, when applying the magnetic layer (top coat layer) to the undercoat layer, the solvent contained in the magnetic layer transfers to the undercoat layer to an excessive extent, so that the magnetic layer cannot be sufficiently applied to the undercoat layer, thereby increasing the surface roughness thereo.

The magnetic powder particles in the magnetic layer of the magnetic recording medium of the present invention may be conventionally used magnetic substances such as acicular iron oxide type magnetic substance ($\gamma$-$Fe_2O_3$, $Fe_3O_4$, and the like), Co-containing acicular iron oxide type magnetic substance, metallic ferromagnetic substance (metallic magnetic substance), hexagonal system magnetic substance (barium ferrite and the like), iron carbide type magnetic substance or the like.

The thickness of the magnetic layer is most favorably set according to the recording density or recording system. The present invention is suitable for a magnetic recording medium in which a magnetic layer thickness of 1.0 $\mu$m or less is required, e.g., a digital system magnetic recording medium having a recording capacity of 20 MB or more. The present invention provides a magnetic recording medium excellent in both durability and electromagnetic transfer characteristic, although the recording medium has such a thin application type magnetic layer.

The process for the preparation of the magnetic recording medium of the present invention is as follows.

A coating material for the undercoat layer is prepared by kneading and dispersing titanium dioxide and carbon black used in the present invention together with a binder, lubricant, solvent and the like. When preparing the coating material, all of the above materials are poured into an equipment for kneading and dispersion simultaneously or in some installments. For example, carbon black is first poured into a solvent containing a binder to effect kneading, and thereafter, titanium dioxide is poured into the thus obtained kneaded mixture to continue the kneading, whereafter the newly obtained kneaded mixture is transferred to a dispersing device so as to complete dispersion. Subsequently, a lubricant is added to the thus obtained dispersant to prepare a coating material for undercoat layer. Other similar methods may be used.

The kneading and dispersing of the materials for the preparation of an undercoat layer, may be accomplished by various known methods, such as by the use of a kneader, planetary mixer, extruder, homogenizer, high speed mixer or the like. Examples of a dispersing device are a sand mill, ball mill, atomizer, tornado disperser, high speed impact mill and the like.

Various known additives for the magnetic layer or back coat layer may be added into the coating material for the undercoat material if necessary, such as various kinds of hardeners, fungicides, surface active agents and the like.

The coating material may be applied to the base material by an air doctor coater, blade coater, air knife coater, squeeze coater, reverse roll coater, gravure coater, kiss coater, spray coater, or die coater. The coating material for top coat layer is prepared by kneading and dispersing various magnetic substances together with a binder, lubricant, anti-friction material, solvent and the like, and the thus prepared coating material for top coat layer is applied onto an undercoat layer.

For the kneading-dispersion of the coating material for the top coat layer, its application and the addition of various additives, the aforesaid known techniques may be used for the coating material for undercoat layer.

The application of the top coat layer may be performed either by applying the undercoating material to the base material followed by drying thereof to form an undercoat layer and thereafter applying the top coat layer, or applying the top coat layer before the undercoat layer is dried, or by simultaneously applying the undercoat layer and the top coat layer and thereafter drying these layers.

Although the drying temperature for the undercoat layer and top coat layer varies depending upon the type of solvent or base material used, the drying of these layers is performed preferably at a temperature ranging from 40 to 120°C under a drying air flow rate ranging from 1 to 5 $k\ell/m^2s$ for a drying time ranging from 30 seconds to 10 minutes. In addition, the drying may be accomplished by irradiation with infrared rays, far infrared rays or electronic beam.

Before the top coat layer is dried, the magnetic particles may be orientated or disorientated, if necessary. Orientation of the magnetic particles is performed by exposing the coating to a magnetic field in a longitudinal direction, vertical direction or an oblique direction (e.g., diagonally to the plane of the base material by an angle of 45 degrees, etc.) by a permanent magnet or an electro-magnet, and drying the coating outside or inside the magnetic field. The disorientation of the magnetic particles is performed randomly setting the direction of the magnetic particles in a horizontal plane or in a three-dimensional space by an alternating current magnetic field or rotating magnetic field. In order to perform this orientation or disorientation, known methods may be used.

The thus dried undercoat layer and top coat layer may be subjected to calendering treatment, if necessary. Calendering treatment is effected by a known method using a metal plated roll, flexible roll or the like. Although the treating conditions vary depending on the kinds of the materials (binder, base material or the like) used in the undercoat layer and top coat layer, this treatment is preferably effected at a heating temperature ranging from 30 to 90°C, and under a pressurizing strength ranging from 500 to 4000 pounds per lineal inch (pli).

In addition, as various materials except for titanium dioxide and carbon black specified in the present invention, there may be used known ones, and the selection and combination of each material may be conducted if necessary.

The present invention will now be further illustrated by the following non-limiting example.

Example

(1) Preparation process for a coating material for the undercoat layer:

The raw materials set forth in were subjected to kneading-dispersion treatment in the way mentioned below so that a coating material was prepared. All of the carbon black was poured into a solution obtained by dissolving all of the urethane resin and all of the vinyl resin in all of the solvent, whereafter these substances were kneaded for about 10 minutes by a high speed mixer. Furthermore, all of the acicular titanium dioxide was poured into these substances, and they were kneaded for about 50 minutes by a high speed mixer to obtain a kneaded mixture. The thus obtained kneaded mixture was transferred into a sand mill to effect a dispersion treatment for 20 hours, so that a disperse substance was obtained. Into the thus obtained disperse substance were poured all of the oleic acid, all of the isocetyl stearate and all of the polyisocyanate, and these were stirred for about 30 minutes by a high speed mixer (Ashizawa Seisakusho) so that a final undercoating material was obtained.

TABLE 1 - Composition List for Undercoat Layer

| Total amount of titanium dioxide and carbon black (see Table 3) | | 102 (parts by weight) |
|---|---|---|
| Urethane resin | "XE-148" produced by Takeda Pharmaceutical Co., Ltd.; molecular weight: about 8000 | 6 |
| Vinyl resin | "C-130" produced by Sekisui Kagaku K.K.; molecular weight: about 34,000 | 6 |
| Oleic acid | "Lunac-OA" produced by Kao K.K. | 1 |
| Isocetyl stearate | "ICS-R" produced by Higher Alcohol Co., Ltd. | 3 |
| Polyisocyanate | "SBU-0856" produced by Sumitomo Bayer Urethane Co., Ltd. | 6 |
| Methyl ethyl ketone | | 110 |
| Cyclohexanone | | 35 |
| Toluene | | 35 |

(2) Preparation process for top coating material:

The raw materials set forth in Table 2 were subjected to kneading-dispersion treatment in the way mentioned below, so that a top coating material was prepared. In a solution obtained by dissolving all of the urethane resin in all of the solvent was poured the metallic magnetic substance little by little, while the solution was stirred by a high speed mixer. After the stirring had been continued for about 30 minutes from the time when the metallic magnetic substance was poured, all of dispersants 1 and 2 were poured into the solution. About 10 minutes thereafter, of the vinyl resin was poured into the solution and the stirring was continued. Several minutes thereafter, all of the alumina was poured into the solution and the solution was stirred for about 10 minutes, so that a kneaded mixture was obtained. The thus obtained kneaded mixture was transferred into a sand mill and subjected to a dispersing treatment for 30 hours, so that a disperse substance was obtained. Into the thus obtained disperse substance, were poured all of the oleic acid, the isocetyl stearate, and the polyisocyanate, and the obtained mixture was stirred for about 30 minutes by a high speed mixer so that a final top coating material was obtained.

TABLE 2 - Composition List for Top Coat Layer

| | | |
|---|---|---|
| Metallic magnetic substance | ("HM-55" produced by Dowa Mining Co., Ltd.,; BET value: 49 m$^2$/g) | 100 (parts by weight) |
| Alumina | "HIT-50" produced by Sumitomo Kagaku K.K.; BET value: 8.4 m$^2$/g | 8 |
| Dispersant 1 | phosphorated polyoxyalkyl polyol disclosed in Japanese Unexamined Patent Publication No. 63-14326 | 4 |
| Dispersant 2 | N,N-dialkyl-N-hydroxylalkylpolyoxyalkylene ammonium salt disclosed in U.S. Pat. No. 3,123,641 | 2 |
| Urethane resin | "TI-7310" produced by Sanyo Kasei K.K.; molecular weight [Mw] about 33,000 | 4 |
| Vinyl resin | "VAGH" produced by Union Carbide Co., Ltd.; presumed average polymerization degree = 500 | 6 |
| Oleic acid | "Lunac-O-A" produced by Kao K.K. | 3 |
| Isocetyl stearate | "ICS-R" produced by Nikko Chemical Co., Ltd. | 2 |
| Polyisocyanate | "SBU-0856" produced by Sumitomo Bayer Urethane Co., Ltd. | 7 |
| Methyl ethyl ketone | | 120 |
| Cyclohexanone | | 40 |
| Toluene | | 40 |

(3) Application process:

The aforesaid coating material for undercoat layer was applied onto a base film ("AXP-54"/62 $\mu$m thickness produced by Teijin K.K.) by a gravure coater, and dried for 40 seconds at a temperature of 40°C, and then, for 30 minutes at a temperature of 100°C. After the drying had been completed, the base film was subjected to a calendering treatment by a metal plated roll. This treatment was performed at a heating temperature of 45°C and under a force of 1500 pli. The thickness of the undercoat layer after the calendering treatment had been completed was 2.0 $\mu$m. After the undercoat layer had been sufficiently hardened (at a room temperature for three days), the aforesaid coating material for top coat layer was applied onto the undercoat layer by a gravure coater, and dried for 30 seconds at a temperature of 40°C, and then, for 30 seconds at a temperature of 80°C. After the drying had been completed, the base film was subjected to a calendering treatment by a metal plated roll. This treatment was effected a heating temperature of 45°C, under a pressurizing strength of 1500 pli, and the sum thickness of the top coat layer and the undercoat layer after the calendering treatment had been completed was 2.5 $\mu$m.

The following samples were prepared as listed in Table 3.

## TABLE 3

|  | Titanium dioxide | Carbon black |
|---|---|---|
| Sample | Produced by Ishihara Sangyo K.K.; acicular<br>average particle lone axis length = 0.2 $\mu$m<br>100 parts by weight | Produced by Lion K.K. "K.B.EC 600JD"<br>oil absorbency = 495 m$\ell$/100 g<br>2 parts by weight |
| Comparative Sample 1 | Produced by Ishihara Sangyo K.K.; acicular prototype No. 19-1<br>average particle long axis length = 0.8 $\mu$m<br>100 parts by weight | Produced by Lion K.K. "K.B.EC 600JD"<br>oil absorbency = 495 m$\ell$/100 g<br>2 parts by weight |
| Comparative Sample 2 | Produced by Ishihara Sangyo K.K.; granular "TTo558"<br>average particle diameter = 0.02 to 0.05 $\mu$m<br>100 parts by weight | Produced by Lion K.K. "K.B.EC 600JD"<br>oil absorbency = 495 m$\ell$/100 g<br>2 parts by weight |
| Comparative Sample 3 | Produced by Ishihara Sangyo K.K.; granular "KR-310"<br>average particle diameter = 0.4 $\mu$m<br>100 parts by weight | Produced by Lion K.K. "K.B.EC 600JD"<br>oil absorbency = 495 m$\ell$/100 g<br>2 parts by weight |
| Comparative Sample 4 | Produced by Ishihara Sangyo K.K.; acicular<br>average particle lone axis length = 0.2 $\mu$m<br>82 parts by weight | Produced by Lion K.K. "K.B.EC 600JD"<br>oil absorbency = 495 m$\ell$/100 g<br>20 parts by weight |
| Comparative Sample 5 | Produced by Ishihara Sangyo K.K.; acicular<br>average particle lone axis length = 0.2 $\mu$m<br>100 parts by weight | Produced by Lion K.K. "VALCAN XC^72"<br>oil absorbency = 185 m$\ell$/100 g<br>2 parts by weight |

Note. Comparative Sample 1 is outside of the present invention in its average particle long axis length (0.8 μm); Comparative Samples 2 and 3 are outside of the present invention because titanium dioxide is granular; comparative Sample 4 is outside of the present invention in ratio of titanium dioxide and carbon black (82:20); and comparative Sample 5 is outside of the present invention in its oil sorbency (185 ml/100g).

The results obtained for the samples listed in Table 3 are set forth in Table 4 below.

TABLE 4

| | Ra [nm] | Running durability [10000 passes] | Signal output [db] | Surface resistivity [$\Omega/\square$] |
|---|---|---|---|---|
| Sample | 7.0 | 2000 | +1.7 | $4 \times 10^8$ |
| Comparative Sample 1 | 30.0 | 700 | -0.7 | $2 \times 10^8$ |
| Comparative Sample 2 | 5.9 | 500 | ±1.8 | $7 \times 10^8$ |
| Comparative Sample 3 | 26.7 | 800 | ±0 | $1 \times 10^9$ |
| Comparative Sample 4 | 21.3 | 700 | -0.4 | $3 \times 10^5$ |
| Comparative Sample 5 | 18.2 | 600 | +0.8 | $5 \times 10^{11}$ |

* Ra: center line average height of the magnetic layer surface measured by a three-dimensional roughness measuring machine [TOPO-30] produced by WYKO Co., Ltd.
* Running durability: The recording medium was caused to run while the head of a floppy disk drive was left contacted with the medium, and the running durability was represented by the number of passes of the recording medium before a scratch was formed on the visually observed magnetic layer surface.
* Signal output: The regenerative signal output when a signal with a frequency of 600 kHz was recorded by determined by the use of an NEC 10 MB drive (FD 1331).
* Surface resistivity: The surface resistivity of the magnetic layer surface was determined by a high resistance resistivity meter "Hiresta IP" produced by Mitsubishi Yuka K.K.

## Claims

1. A high recording density magnetic recording medium comprising:
   a non-magnetic base film;
   a magnetic layer; and
   an undercoat layer comprising non-magnetic particles, a binder resin, and a lubricant, and wherein the undercoat layer is provided between the base film and the magnetic layer, wherein the non-magnetic particles comprise (1) acicular titanium oxide with a long axis length within the range of from about 0.1 to 0.5 μm, and (2) a carbon black having a structured constitution having an oil absorbency of at least 300 ml/100 g, wherein the weight ratio between the non-magnetic iron oxide and the carbon black is at least about 90:10.

2. The medium of claim 1, wherein the aspect ratio of the acicular titanium oxide is within the range between 5 and 10.

3.  The medium of claim 1, wherein the weight ratio between the non-magnetic particles and the binder in the undercoat layer is within the range of from 100:5 and 100:100.

4.  The mendium according to one of claims 1, 2 or 3 wherein the undercoat layer is within the range between 0.2 and 5 $\mu$m.

5.  The medium according to one of claims 1 to 4, wherein the thickness of the magnetic layer is 1.0 $\mu$m or less.

6.  The medium of claim 1, wherein the oil absorbency of the carbon black is at least 450 ml/100 g.

**European Patent Office**

## EUROPEAN SEARCH REPORT

Application Number

EP 94 40 0187

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 963 433 (HIROSHI OGAWA ET AL.) 16 October 1990<br>* column 1, line 22 - line 26 *<br>* column 1, line 47 - line 58 *<br>* column 2, line 9 - line 15 *<br>* column 3, line 1 - line 24 *<br>--- | 1-6 | G11B5/704 |
| A | PATENT ABSTRACTS OF JAPAN<br>vol. 13, no. 159 (P-858) 18 April 1989<br>& JP-A-63 317 926 (TOKIN CORP) 26 December 1988<br>* abstract *<br>----- | 1,4,5 | |

TECHNICAL FIELDS SEARCHED (Int.Cl.5)

G11B

The present search report has been drawn up for all claims

| Place of search | Date of completion of the search | Examiner |
|---|---|---|
| THE HAGUE | 15 April 1994 | Klocke, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)